# EUROPEAN PATENT SPECIFICATION

(11) **EP 3 746 251 B1**
(45) Date of publication and mention of the grant of the patent: **18.03.2026**
(21) Application number: 19746775.6
(22) Date of filing: 29.01.2019
(51) Int. Cl.: B23K 10/00, B23K 31/12, G01N 21/73, G01J 3/02, G01J 3/443, G01J 3/18, G01J 3/28

(54) **METAL ANALYZING PLASMA CNC CUTTING MACHINE AND ASSOCIATED METHODS**
METALLANALYSIERENDE PLASMA-CNC-SCHNEIDMASCHINE UND ZUGEHÖRIGE VERFAHREN
MACHINE DE DÉCOUPE CNC À PLASMA D'ANALYSE DE MÉTAL ET PROCÉDÉS ASSOCIÉS

(30) Priority: 01.02.2018 US 201815886806
(43) Date of publication of application: 09.12.2020
(73) Proprietor: Fagan, Matthew, Middle Park, Victoria 3206 (AU)
(72) Inventor: Fagan, Matthew, Middle Park, Victoria 3206 (AU)
(74) Representative: Dehns Germany Partnerschaft mbB
(86) International application number: PCT/IB2019/050692
(87) International publication number: WO 2019/150247

(56) References cited:
- WO-A1-2011/134805
- US-A- 6 075 593
- US-A1- 2017 246 703
- US-A1- 2017 246 703
- US-B2- 8 723 078
- LIU XIAN-YUN ET AL: "Time-resolved laser-induced breakdown spectroscopy of aluminum", vol. 4, no. 5, 1 September 2008 (2008-09-01), Germany, pages 369 - 370, XP055833705, ISSN: 1673-1905, Retrieved from the Internet <URL:http://link.springer.com/article/10.1007/s11801-008-8048-9/fulltext.html> DOI: 10.1007/s11801-008-8048-9

## Description

### FIELD OF THE INVENTION

This invention pertains to plasma metal cutting using a numerically controlled machine and spectral analysis to determine metallurgical composition of metal.

### BACKGROUND

When purchasing steel from multiple sources, quality of the steel may not be as dependable and as stable as when purchasing steel from a single source. Also, some steel has unusual composition such as alloying components like Boron, which reduces import duty but affects the behavior of the metal and requires different welding. When this chemical composition becomes hidden in the steel supply chain, the steel can be dangerous.

Originally, only chemical analysis could determine metallurgical components of the steel, and specialty steel suppliers employed metallurgists with laboratory equipment to test the steel. With the rapid availability of high performance microcomputers, heavy stand-alone machines use an arc for spectrographic analysis of a metal sample. Newer test equipment uses Energy Dispersive X-ray Fluorescence (ED-XRF) technology for spectral analysis of steel, although they are expensive and not practical for steel processing workshops.

Plasma cutters have become common for metalworking, including working with steel, aluminum, and other metals. In plasma cutting, a plasma formed of a gas heated by an electric arc serves to conduct electricity into, and remove melted metal from, a metal workpiece. Plasma cutters may be used with "numerically controlled" (NC), computer controlled cutting machines, for example, or may be handheld.

A plasma computer numerically controlled cutting machine coupled to a spectrometer in order to determine the composition of the workpiece being cut is known from US 2017/246703 A1.

### SUMMARY

A first aspect of the invention relates to a metal analyzing plasma CNC cutting machine according to claim 1. A second aspect relates to a method for analyzing composition of a workpiece being cut by a plasma cutting machine according to claim 6. Further preferred embodiments are covered by the dependent claims.

The invention relies on obtaining a sequence of spectra of the captured light in a wavelength range of 290-400 nm, each spectra of the sequence of spectra captured within a time window of less than or equal to one-thirtieth second as cutting begins; determining a selected spectrum from the sequence of spectra by determining ratios of a particular spectral line selected from a 347.6 nanometer spectral line of iron when the metal analyzing plasma CNC cutting machine is cutting a steel workpiece and an aluminum spectral line when the metal analyzing plasma CNC cutting machine is cutting an aluminum workpiece, to background light for each spectrum and selecting a spectrum of the sequence of spectra providing a best ratio of that particular spectral line to background light. The selected spectrum is analyzed to identify primary alloy constituents and secondary impurities of the workpiece.

### BRIEF DESCRIPTION OF THE FIGURES

FIG. 1 shows one example of a metal analyzing plasma CNC cutting machine, in an embodiment.
Fig. 1A shows a collimator of an embodiment, the collimator used to narrow light collection to light emitted at specific points of the plasma arc and workpiece.
FIG. 2 shows the bevel head of the plasma CNC cutting machine of FIG. 1 in further detail showing a spectral analyzer optically coupled to a lens positioned proximate plasma arc, in an embodiment.
FIG. 3 shows the computer of FIG. 1 in further example detail, in an embodiment.
FIG. 4 is a spectral graph illustrating example spectral data captured over the range 250 to 600 nanometers by the metal analyzing plasma CNC cutting machine of FIG.1 when cutting the workpiece, in an embodiment.
FIG. 4A is a spectral graph captured over the range 290 to 400 nanometers in a one-thirtieth second window as cutting begins.
FIG. 4B is a spectral graph captured over the range 290 to 400 nanometers (0.1 nm resolution) captured later in the cutting process than the spectral graph of FIG. 4A.
FIG. 4C is a spectral graph captured over the range 290 to 400 nanometers (0.1 nm resolution) captured during the one-thirtieth second window while cutting a stainless steel.
FIG. 5 is a flowchart illustrating one example method for analyzing metal using the metal analyzing plasma CNC cutting machine of FIG. 1, in an embodiment.
FIG. 6 is a spectral graph illustrating broadband spectral data captured over the range 270 to 1050 nanometers by a metal analyzing CNC cutting machine when the workpiece is first penetrated, showing offsets from black-body radiation.

### DETAILED DESCRIPTION OF THE EMBODIMENTS

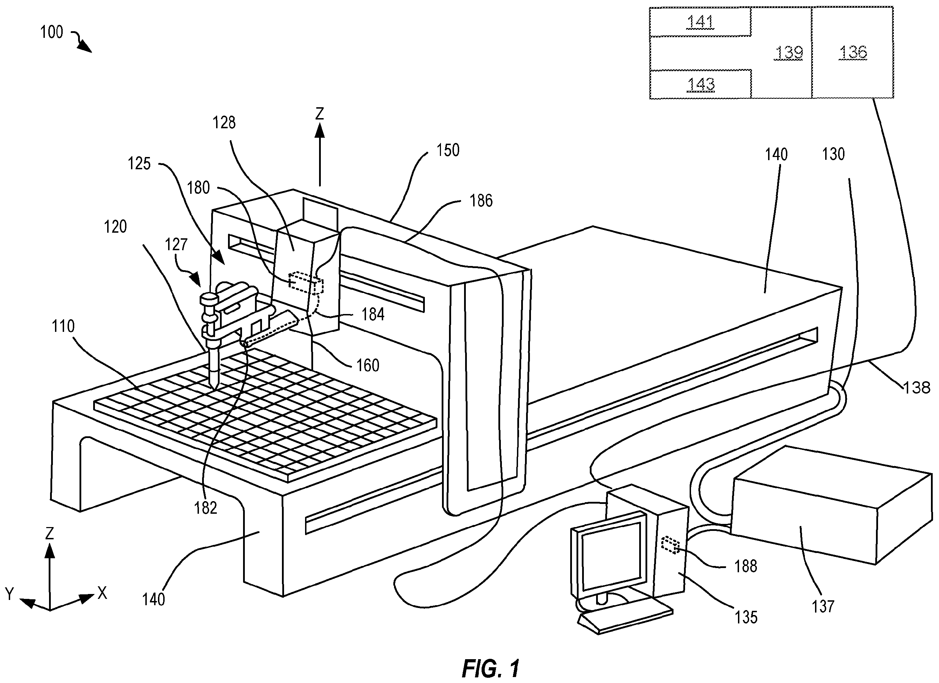

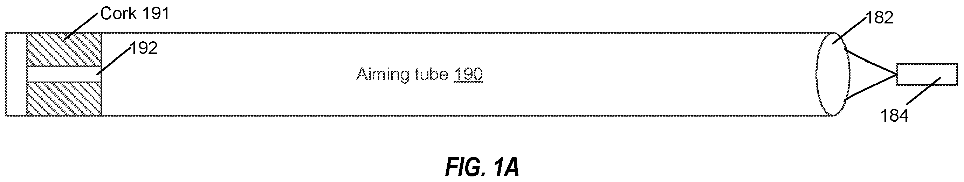

FIG. 1 shows an example metal analyzing plasma CNC cutting machine 100. Like conventional plasma cutting machines, machine 100 includes a bed 140, a gantry 150, and a head apparatus 125 that holds and manipulates a plasma torch 120. A computer 135 (e.g., a personal computer capable running an operating system and software programs) communicates with a remote amplifier box 137 that generates signals through cable 130 for controlling servo motors of gantry 150, head apparatus 125, and plasma torch 120. A metallic workpiece 110 to be cut by machine 100 is placed on bed 140. In the example of FIG. 1, workpiece 110 is a steel grating but may represent any metallic material that may be cut by machine 100 such as steel, aluminum, or brass sheet or plate up to six inches thick.

In certain embodiments, head apparatus 125 may be a bevel head apparatus such as can be found in Patent 8,865,056, which is included herein by reference for purpose of enablement. Bevel head apparatus 125 holds, swivels and tilts torch 120 up to 57 degrees in any plane. Bevel head apparatus 125 includes a pantograph arm 127 that is mounted to an actuator box 128 that contains motors and drivers that manipulate the pantograph arm and plasma torch 120 to cut workpiece 110. Actuator box 128 is formed of metal and acts as a 'Faraday cage' to shield electronics included therein from radiation and heat generated by the plasma arc. Box 128 may be cooled in some embodiments, such as by fans.

In a particular embodiment, plasma torch 120 is initiated by 5,000 volts at a frequency of 2 MHz that ionizes gas released in a high-pressure stream to form a plasma arc with a temperature of around 10,000C. This plasma arc draws a DC current of between 10 amps and 1200 amps at around 150 volts once established. The power released by the plasma arc may reach 180 kW and is typically around 37 kW, and is sufficient to melt thick steel quickly using only electricity and air (although other gas mixes may be used). The plasma arc and melting steel is hot and emits light that carries a wealth of spectral information about the steel being cut, particularly in the electromagnetic spectrum range of Ultra Violet (UV) light.

The plasma arc creates a difficult environment for electronic devices, as it is very hot, splatters molten metal, and its arc-formation power supply of 5,000 volts at a frequency of 2 MHz, generates considerable electromagnetic radiation that interferes with nearby electronic devices. It is therefore difficult to position sensitive electronic equipment near plasma torch 120.

A fiber optic cable allows the sensing electronics to be safely isolated inside a metal Faraday cage while continuously collecting light from the plasma arc. The Faraday cage shields the sensing electronics from the electromagnetic radiation (radio interference) and heat generated by the plasma arc.

Thus, by combining the spectral analyzer, coupled by the fiber optic to the plasma CNC cutting machine, emissions spectra from the metallurgic components of the steel being cut may be monitored periodically or continuously, and those emissions spectra analyzed to determine metallurgic components of the steel being cut. This analysis is like the analysis done for spark analysis which also uses an electric arc to generate light to determine a composition of a metal sample. However, the advantages of machine 100 include that the analysis takes no additional time or effort beyond that needed to cut the workpiece 110.

Pantograph arm 127 is modified to include a lens 182, positioned to capture electromagnetic radiation, particularly in the ultraviolet light portion of the spectrum, from the plasma arc formed by plasma torch 120 while the plasma arc is cutting workpiece 110. For example, lens 182 has a focal length based upon its position relative to the plasma arc, to capture light (i.e., at least a portion of the electromagnetic spectrum) generated by the plasma arc. An optical path 184, which may be a single strand or a multiple-strand fiber optic cable, optically couples lens 182 to a spectrometer 180 positioned within box 128. Thus, spectrometer 180 is protected from interference from the plasma arc but receives light emitted from the plasma arc, via lens 182 and optical path 184, while cutting workpiece 110. Spectrometer 180 is selected based upon the spectral ranges of light produced by the plasma arc of the cutting torch as known in the art of spectral analysis. In one example, spectrometer 180 is a Blue-Wave Miniature Fiber Optic Spectrometer device from StellarNet Inc., however, other spectrometer devices may be used without departing from the scope hereof.

In a particular embodiment, lens 182 is mounted at the rear of a collimator constructed of a ten-centimeter-long aiming tube 190 (FIG. 1A) of diameter one centimeter. The collimator is adapted to be aimed at particular portions of the plasma arc to avoid undue interference from light emitted as black-body radiation by nearby hot metal-it is believed that the collimator should be aimed to optimize collection of light from plasma adjacent the workpiece being cut as cutting begins and metal vapor first explodes from the workpiece into the arc, and not aimed directly at either the workpiece or the electrodes that form the arc. Use of the collimator permits collecting light from particular portions of the plasma arc despite placement of the lens 182 and optical path 184 at a sufficient distance from the plasma arc to prevent damage to lens 182 and optical path 184 that may otherwise be caused by the intense arc that in some embodiments reaches or exceeds 40 kw. In a particular embodiment, a black rubber cork 191 having a drilled hole 192 is fitted at an end of the tube 190 distal to lens 182 and optical fiber or optical path 184 to narrow a field of view of the collimator. The lens focuses light that has passed through the drilled cork and tube onto an end of optical path 184, which in an embodiment is an optical fiber capable of transmission from 190 to 2200 nanometers. In an alternative embodiment a telescopic collimator is used to collect light from the plasma arc into the optical path.

Spectrometer 180 is communicatively coupled to computer 135 via a communication cable 186, such as an electrically screened cable or a fiber-optic communications cable. Spectrometer 180 may share a communication path between bevel head apparatus 125 and computer 135 without departing from the scope hereof. In one particular embodiment, communication cable 186 is a USB cable. Computer 135 includes software 188 that processes data received from spectrometer 180 to determine metallurgical content of workpiece 110 based upon a spectrum captured by spectrometer 180 while workpiece 110 is being cut by machine 100.

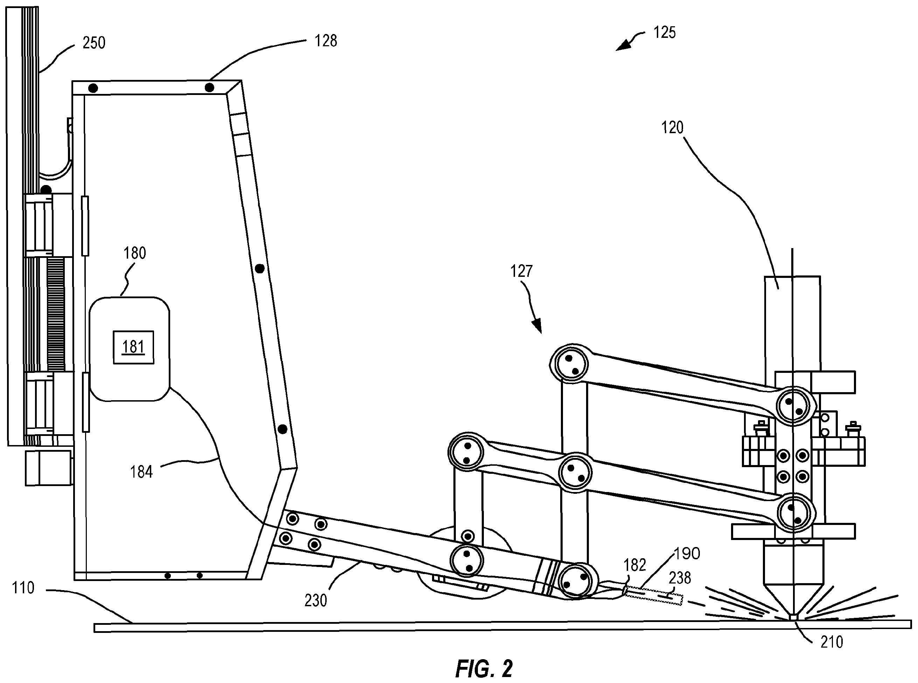

FIG. 2 shows bevel head apparatus 125 of metal analyzing plasma CNC cutting machine 100 of FIG. 1 in further exemplary detail. Lens 182 is positioned on a lower armature 230 of pantograph arm 127 in alignment 238 with a plasma arc 210 formed by plasma torch 120. As such, the position of lens 182 relative to the plasma arc 210 is constant, since, due to the advantages of the pantograph design, the center of plasma arc 210 does not move relative to lower armature 230. Further, as plasma torch 120 is moved to cut workpiece 110, lens 182 remains in a constant position relative to plasma arc 210. That is, lens 182 is positioned on the arm supporting plasma torch 120 and moves with the torch. When other forms of cutting head are used instead of bevel head apparatus 125, lens 182 is similarly positioned to ensure that lens 182 is aligned with plasma arc 210, and remains near the plasma arc to capture light from the plasma arc while excluding most surrounding ambient light, and moves as the plasma arc moves to cut workpiece 110. For example, as bevel head apparatus 125 moves up and down relative to a backplane 250, which in turn moves left and right relative to gantry 150, which in turn moves backwards and forwards relative to bed 140, lens 182 remains aligned with, and near, plasma arc 210.

Optical path 184 conveys the light captured by lens 182 to spectrometer 180 that spectrally analyzes the light to generate spectral data 181. Spectral data 181 is for example a digital representation of spectral content of the light captured by lens 182 from plasma arc 210. Lens 182 moves together with bevel head apparatus 125 as torch 120 is controlled to cut workpiece 110 and spectrometer 180 is positioned a safe distance from plasma arc 210 and couples via optical path 184.

As shown in FIG. 2, lens 182 is positioned at a distal end of lower armature 230 to capture at least part of the electromagnetic spectrum generated by plasma arc 210 as it cuts workpiece 110. Lens 182 may include a front element or window that is replaceable in the event of damage caused by plasma arc 210 or splattered molten metal. Optical path 184 may be positioned within lower armature 230 for protection from damage by plasma arc 210 and is for example a flexible fiber optical cable that conveys light from lens 182 to spectrometer 180. In an alternative embodiment, optical path 184 lies within a tubular conduit to protect it from damage. Spectrometer 180 is for example a micro spectrometer that uses a diffraction grating and sensing array to derive spectral data 181 from the light received via optical path 184, the spectral data includes an intensity and wavelength (or equivalently frequency) distribution of light generated by plasma arc 210. Spectral data 181 is sent to computer 135 for further analysis.

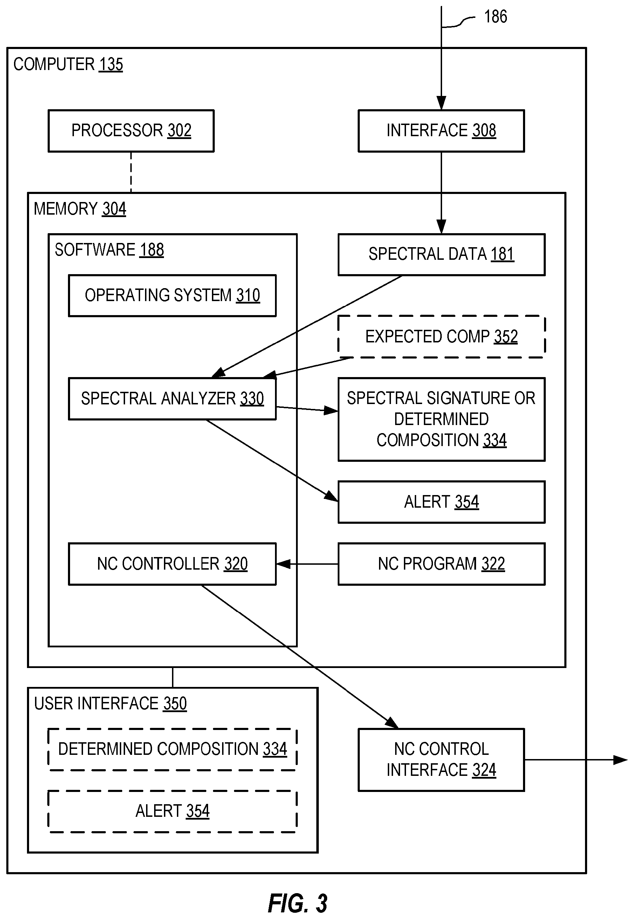

FIG. 3 shows computer 135 in further example detail. Computer 135 includes at least one processor 302 communicatively coupled to memory 304. Memory 304 is non-transitory and represents one or both of volatile memory (e.g., RAM, SRAM, DRAM, and so on) and nonvolatile memory (e.g., ROM, PROM, EPROM, FLASH, magnetic media and optical media). Memory 304 is shown storing software 188 that includes an operating system 310, a CNC controller 320 function, and a spectral analyzer 330 routine. Operating system 310 provides a real-time multitasking environment within computer 135 for concurrently executing CNC controller 320 and spectral analyzer 330. Operating system 310 is selected from the group including Microsoft^{®} Windows^{™}, Apple^{®} OS^{™}, and so on. For example, operating system 310 coordinates execution of CNC controller 320 and spectral analyzer 330.

CNC controller 320 follows a CNC program 322 to control movement and operation of plasma torch 120 to cut parts from workpiece 110 as desired. For example, CNC controller 320 may send commands, via CNC control interface 324 and remote amplifier box 137, to each of gantry 150, bevel head apparatus 125 and plasma torch 120. As known in the art of CNC controllers, CNC controller 320, gantry 150, and bed 140 are configured so that CNC controller 320 can direct movement of gantry 150 along bed 140, and of bevel head apparatus 125 along gantry 150, thereby permitting CNC controller 320 to move bevel head apparatus 125 to position plasma torch 120 at any X-Y coordinate in a predefined operational area lying within a plane over and parallel to bed 140. Similarly, CNC controller 320 is configured to control motors within box 128 to operate pantograph arm 127 to position plasma torch 120 at any Z or height coordinate within a predefined operational volume incorporating the plane over and parallel to bed 140. CNC controller is thereby configured to position torch 120 at any position within the predefined operational volume as needed to make preprogrammed cuts to workpiece 110.

Operating system 310 runs spectral analyzer 330 concurrently with CNC controller 320 to process spectral data 181, received via interface 308 and communication cable 186 from spectrometer 180, and generate determined composition 334. CNC controller 320 and spectral analyzer 330 may communicate such that spectral analyzer 330 controls spectrometer 180 to capture spectral data 181 only when plasma torch 120 is active and plasma arc 210 is present.

In one example of operation, CNC controller 320 and spectral analyzer 330 cooperate to capture spectral data 181, the spectral data including emissions spectra information, from different areas of cut of workpiece 110 as it is cut by machine 100, and spectral analyzer 330 generates determined compositions 334 for each different area of cut.

For purposes of this document, a composition of a metal workpiece, such as workpiece 110, is a list of elements that may be found in metal workpieces together with a percentage of each element of the list that is present in the workpiece. For example, metal workpieces of cast iron, steel, aluminum, brass, bronze, or copper may contain aluminum, arsenic, beryllium, bismuth, boron, carbon, cerium, chromium, copper, iron, lead, magnesium, manganese, molybdenum, nickel, phosphorous, silicon, silver, sulfur, tin, titanium, tungsten, vanadium, zinc, and zirconium at various percentages. It is well known that percentages of each element present in a metal workpiece may dramatically affect physical properties such as hardness of the workpiece, as well as chemical properties like corrosion resistance, for example hardness of steel is significantly affected by carbon percentage content, and corrosion resistance by chromium, and nickel percentage content. Similarly, copper-based alloys have physical properties that are significantly affected by tin, zinc, and aluminum percentages. Generally, emissions spectra of each element in isolation are known. Emissions spectral data 181 includes a superposition of emissions spectra of the elements included in a composition of workpiece 110.

Trace elements such as europium and iridium may also be present, and produce characteristic spectral lines in the emissions spectral data. Trace elements typically have concentrations low enough to not significantly affect physical properties of the workpiece, but these concentrations are of interest in fingerprinting the steel to identify sources.

Various bodies, including the Society of Automotive Engineers (SAE) and ASTM International, have published named specifications for metal, such as SAE grade 440 steel, ASTM A1 for railroad rails, ASTM A182 for stainless steel pipe fittings, A354 for steel alloy bolts, and A514 for weldable steel plate; each specification includes a range of allowable percentages of specific elements for composition of metal acceptable under the specification as well as other factors, such as heat treatments, used in producing metal objects to meet the specification. Other specifications, such as for rifle barrels, armor plate and bolts, screws, and sheetmetal used in aircraft construction, have been published by governmental and military agencies. These specifications may be referenced by those who order metal from foundries.

In each specification, some elements are regarded as desired, mandatory, alloy constituents, such as iron and carbon in steel, typically added intentionally when workpieces are made at a foundry and for which associated percentages appear in specifications as ranges with non-zero minimum and maximum values. Other elements, such as excessive boron or sulfur in steel, may be regarded as objectionable impurities, with only a maximum listed for some specifications, but are sometimes present in workpieces. Still other elements, such as rare earth elements or actinide series elements, may be present in trace amounts, their percentages in composition of workpieces is useful in fingerprinting workpieces and tracing origin to particular mines and mills even though they may not be listed in common specifications and may be at sufficiently low concentrations that they do not significantly alter material properties of the workpiece.

Spectral analyzer 330 includes include machine readable instructions that, when executed, perform methods known in the art for identifying peaks in spectral data 181 and fit known emissions spectra of each element of a composition of workpiece 110 to observed emissions spectra, thereby identifying percentages of each element in workpiece 110 and determining determined composition 334 of workpiece 110. While percentages of most elements in workpiece 110 can be identified using air as the gas from which the plasma is formed, in some embodiments an inert gas such as argon is used as the supplied gas so that percentages of oxygen and nitrogen in the workpiece 110 can be determined during cutting.

In some embodiments, an expected composition 352 of workpiece 110 is defined prior to cutting of workpiece 110. In embodiments, expected composition 352 includes ranges of acceptable content for particular elements. In a particular embodiment, this desired composition is entered into computer 135 as expected composition 352. In an alternative embodiment, a specification identifier is entered into computer 135, whereupon computer 135 queries a database 139 on a server 136, which returns expected composition ranges from a specification entry 141 of database 139 to computer 135 as expected composition 352. In either embodiment, once cutting of workpiece 110 by machine 100 starts, spectral analyzer 330 determines determined composition 334 from light of plasma arc 210, and compares the determined composition 334 to expected composition 352, generating an alert 354 when determined composition 334 indicates that workpiece 110 is not of the expected composition 352. For example, spectral analyzer 330 and computer 135 may be configured to ignore variations in composition that are within limits of a specification or to ignore other minor variations in composition, and/or may be configured to generate alert 354 when unwanted contaminants are identified in workpiece 110 or determined composition lies outside limits of a specific specification.

Computer 135 may also include a user interface 350 for interacting with an operator of machine 100, and user interface 350 may display one or both of determined composition 334 and alerts 354 to the operator as machine 100 cuts workpiece 110.

In an embodiment, computer 135 is coupled through a computer network 138, which in a particular embodiment is a local network and in another particular embodiment is the Internet, to server 136 having steel composition information in database 139.

In embodiments having database 139, database 139 may be configured with specification entries 141 for each of several specifications of metal, such as steel, with composition ranges for each specification. In a particular embodiment, database 139 is configured with a table of acceptable compositions, typically entered as ranges of percentages for each of several elements, indexed by published specification identifiers.

In embodiments having database 139, database 139 may also be configured with composition database entries 143 having determined compositions, or fingerprints, for metal of each of several specifications as produced by each of several foundries. These determined compositions may be measured by plasma cutting machines herein described, or determined by spectrometric analysis with other equipment. In embodiments having composition database entries 143, computer 135 is configured to upload a determined composition 334 of each workpiece 110 to database 139 as an additional composition database entry 143 with any identified specification and identification of the foundry or steel mill the workpiece originated from.

It is known that iron ore varies in composition from mine to mine, and that impurities found in ore may appear in smelted metal. For example, iron ore from the Dannemora mine in Sweden was low in phosphorus and sulfur, while high in certain other metals; during the seventeenth and eighteenth centuries cast iron cannon made from Dannemora ore developed a reputation as being much less likely to explode when fired than cannon made from iron ore from many other sources because of the ore's low sulfur and phosphorous content. While major impurities and amounts of alloying elements, including sulfur and phosphorous, are often corrected during modern smelting and foundry operations, other, minor, alloying elements and impurities may not be corrected and will show as minor elements in determined composition 334. Typically, major impurities and alloying elements are associated with a specification of metal in workpiece 11, while minor elements in workpiece 110 are associated with a source from which the workpiece originated. The pattern of these impurities in determined compositions in database 139 can therefore serve to help identify a source for the workpiece.

In an embodiment, after determining determined composition 334, computer 135 and server 136 are configured to search database 139 for composition database entries 143 most closely matching in major alloying elements to determined composition 334 and provide identifying information to a user regarding specifications associated with those nearest composition entries. Further, computer 135 and server 136 are configured to search database 139 for composition database entries 143 most closely matching in minor elements to determined composition 334 and provide a fingerprint identifying information to a user regarding a likely source of metal in workpiece 110. For example, for a stainless-steel workpiece, iron, nickel and chromium are major alloying elements added with percentages greater than one percent during foundry operations and are indicative of a specification for the stainless steel, while certain other elements of determined composition 334 are typically not intentionally added and their concentrations are part of the fingerprint for identifying a source of the metal in workpiece 110.

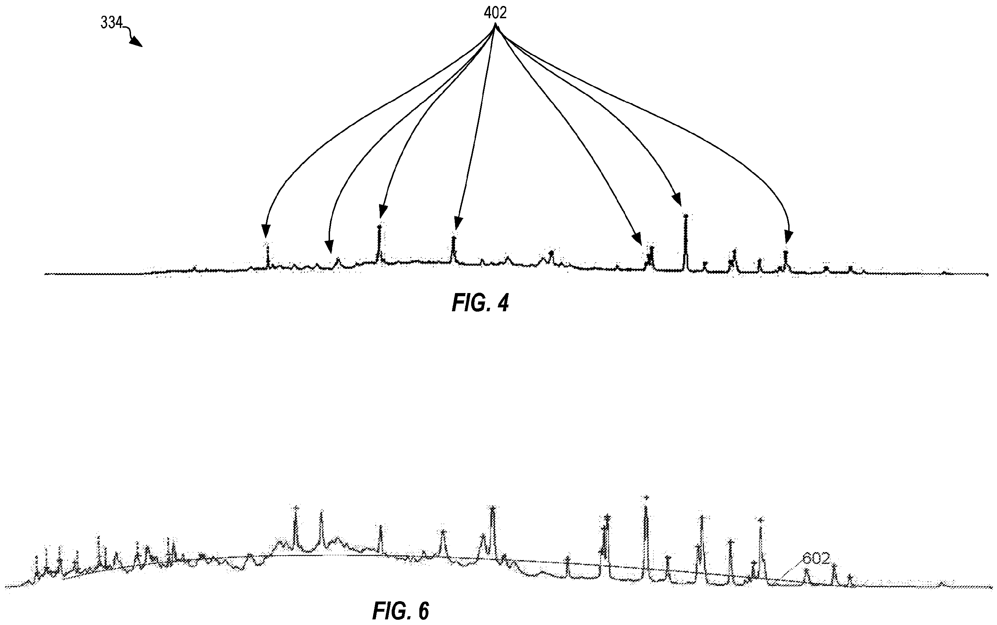

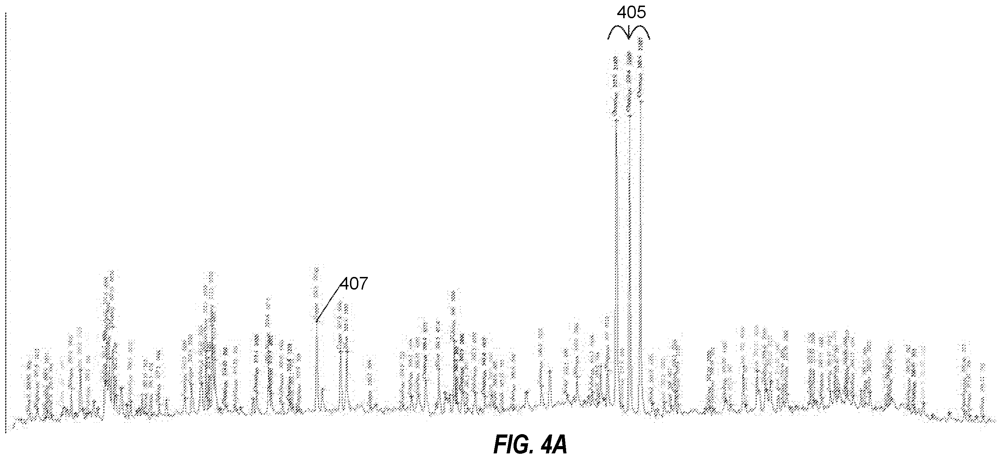

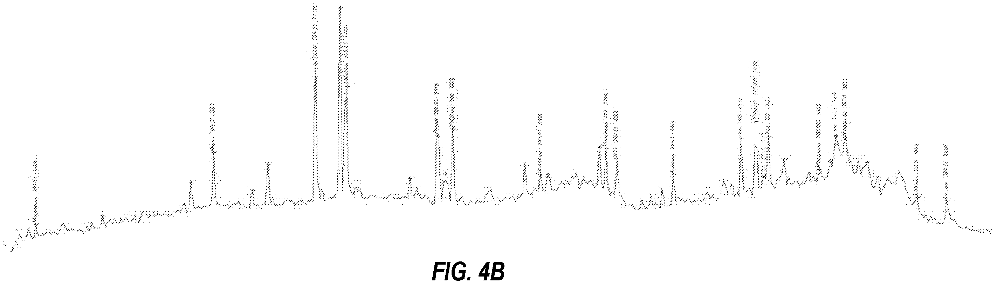

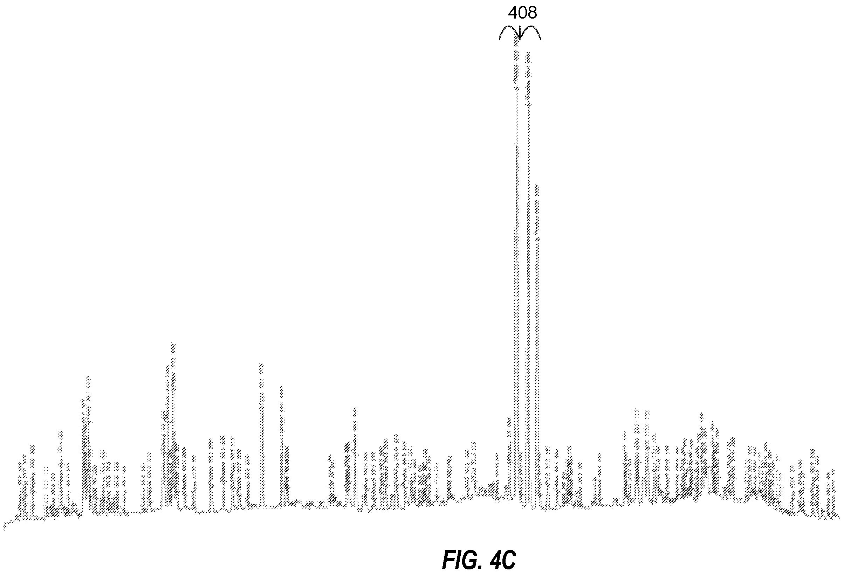

FIG. 4 shows one example spectral data 181 from 250 to 600 nanometers captured after metal is pierced by metal analyzing plasma CNC cutting machine 100 of FIG.1 when cutting workpiece 110. In this example, workpiece 110 is stainless steel and contains molybdenum and spectral data 181 shows multiple of spectral features 402. Determined composition 334 may be generated from spectral data 181 near instantly as spectral data 181 is sent to computer 135 as machine 100 cuts workpiece 110. Determined composition 334 shows the constituent elements of workpiece 110 in proportion. For steel, a major constituent is Iron (Fe), but it may include other constituents such as Chromium for stainless, Carbon, Molybdenum, Vanadium, Titanium, and Boron, and may also include impurities such as Sulfur and other elements. By providing machine 100 with simultaneous cutting and spectral analysis capability, the operator may verify that workpiece 110 is of correct composition and is warned of unwanted impurities or unexpected presence of critical alloying elements such as Boron. Being aware of unexpected composition at the first cut of workpiece 110 saves potentially wasted time in cutting and attempting to weld steel contaminated with Boron, for example. Spectral analysis of each workpiece also prevents unexpected reduction in finished item quality.

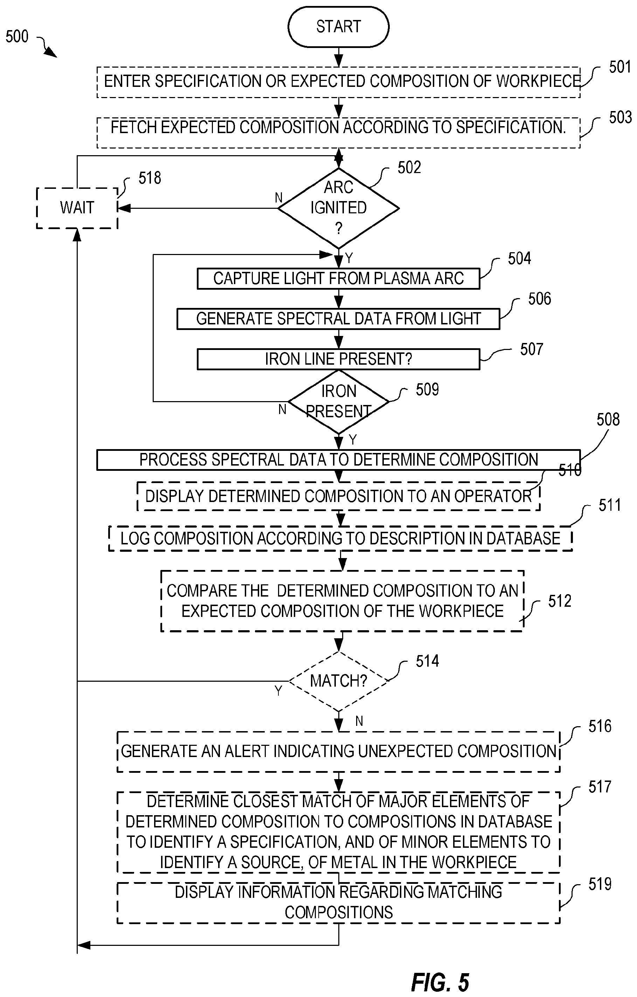

FIG. 5 is a flowchart illustrating one example method 500 for analyzing metal using metal analyzing plasma CNC cutting machine 100 of FIG. 1. Method 500 is implemented by lens 182, optical path 184, spectrometer 180, and computer 135 of machine 100. In this example, method 500 starts when machine 100 is about to cut, or has started cutting workpiece 110. If not already entered, a specification or desired composition of material of the workpiece is optionally entered 501 into computer 135. If a specification name is entered, in step 503, computer 135 is configured to access a corresponding specification entry 141 in database 139 of server 136 and fetch an expected composition database entry 143 from database 139 into local expected composition 352.

Step 502 is a decision. If, in step 502, method 500 determines that the arc has been ignited, method 500 continues with step 504; otherwise, method 500 continues with step 518. In one example of step 502, spectral analyzer 330 cooperates with CNC controller 320 to determine whether plasma arc 210 is operating on plasma torch 120. In another example of step 502, spectral analyzer 330 processes spectral data 181 to determine when plasma arc 210 is operating.

In step 504, method 500 captures light from the plasma arc. In one example of step 504, lens 182 captures light from plasma arc 210 and optical path 184 conveys the light to spectrometer 180. In step 506, method 500 generates spectral data from the light. In one example of step 506, spectrometer 180 generates, using a diffraction grating and sensors, spectral data 181 from light captured by lens 182.

It has been found that during normal cutting, there is much interference from the intense light of the plasma arc, including spectral lines from copper, silver, and hafnium eroded from the anode and cup electrodes between which the plasma arc extends. Further, spectral lines at long wavelengths become heavily obscured by black-body radiation from hot metal as the metal being cut is heated by the plasma.

Spectral analysis of black-body radiation from metal being cut as indicates temperatures on the order of 3500 degrees Celsius, while temperatures of the plasma itself may reach 10,000 degrees Celsius. Broad-wavelength spectra, as illustrated in FIG. 6 over the range of 270 to 1050 nanometers, and spectra captured during normal cutting convey little information about the metal being cut. In the spectra of FIG. 6, the broad base curve 602 underlying the spectra is produced by black-body radiation.

The best spectra obtained from the light of the plasma arc are in the wavelength range from 290 to 400 nanometers, as illustrated in Fig. 4A. Further, to avoid interference from black-body radiation, spectra must be captured in a brief time window as the arc is established and cutting begins; after sufficient metal is ionized and excited to provide spectral emissions lines, but before these spectral lines are drowned in a combination of spectral lines emitted by ions from eroded cap and anode electrodes and intense black-body (Stefan Boltzmann) radiation from the hot metal being cut.

In an embodiment, spectra over the wavelength range 290-400 nanometers with resolution 0.1 nanometer or better, as illustrated in FIGs. 4A, are captured in a time window of one-thirtieth second as cutting begins as sparks explode from the workpiece being cut into the plasma as the workpiece is first penetrated. In a particular embodiment for cutting steel, a sequence of spectra is captured in narrow windows of one-thirtieth second at a rate of thirty spectra per second as cutting begins, each spectrum is examined for presence of a 347.6 nanometer spectral line emitted by ionized iron, a number of the first spectra containing this iron emissions line as cutting begins are captured and a ratio of intensity of the iron line to background light is determined. The best of these captured spectra, as indicated by the ratio of iron emissions line intensity to background, is processed to identify both the primary steel alloy constituents and the secondary impurities of the steel.

In an alternative embodiment, the sequence of spectra is captured in windows of width one-sixtieth of a second at sixty spectra per second as cutting begins. In other alternative embodiments the narrow time window for capturing each spectra of the sequence of spectra is of other time durations less than or equal to one thirtieth of a second, and with a corresponding frame rate.

In the spectra of FIG. 4A, captured as cutting begins, spectral lines of chromium 405, copper 407, and other elements are recognizable. Experiment shows that spectra acquired even one tenth of a second before or after the best captured spectra lack sufficient detail for analysis.

In an alternative embodiment, adapted for cutting aluminum workpieces, instead of examining each spectra for an iron line, each spectra is examined for presence of an aluminum emissions line and a ratio of intensity of the aluminum emissions line to background light is used to identify the best of captured spectra. The identified best of captured spectra is used to determine both the primary alloy constituents and secondary impurities of the aluminum workpiece.

FIG. 4B is a spectral graph captured over the range 290 to 400 nanometers (0.1 nm resolution) captured a second later in the cutting process than the spectral graph of FIG. 4A. and illustrative of the interference from black-body radiation background light that tends to obscure spectral peaks during most of the cutting process.

FIG. 4C is a spectral graph captured over the range 290 to 400 nanometers captured during the one-thirtieth second window as cutting a stainless steel workpiece begins. The three highest peaks 408 represent chromium, an element found in far higher concentrations in most stainless steel than in low-carbon non-stainless steel, and permit the system to distinguish stainless from low-carbon non-stainless steel.

In step 507 each spectra is examined for presence of a 347.6 nanometer spectral line emitted by ionized iron. Step 509 is a decision, if iron is not found, the system retries capturing 504 the spectra. A small number of the first spectra containing this iron line are processed further in step 508.

In step 508, method 500 processes the spectral data and generates a determined composition. In one example of step 508, spectral analyzer 330 is executed by processor 302 to process spectral data 181 and generate determined composition 334.

Step 510 is optional. If included, in step 510, method 500 displays the determined composition of step 508 to an operator. In one example of step 510, spectral analyzer 330 displays determined composition 334 on user interface 350 of computer 135.

Step 511 is optional. If included, in step 511, method 500 logs the determined composition as an entry in the database. In one example of step 511, spectral analyzer 330 logs determined composition 334 as specification entry 141 of database 139.

Steps 512 through 516 are also collectively optional. If included, in step 512, method 500 compares the determined composition 334 to an expected composition 352 of the workpiece. Step 514 is a decision. If, in step 514, method 500 determines that the determined composition and the expected composition match to within limits, method 500 continues with step 518; otherwise, method 500 continues with step 516.

In step 516, method 500 generates an alert indicating unexpected composition. In one example of step 516, spectral analyzer 330 generates alert 354 and displays alert 354 on user interface 350. Method 500 then continues with step 517.

Steps 517 and 519 are optional. In step 517, method 500 inspects composition database entries 143 to determine a closest match of the determined composition 334 to determined composition portions of pre-existing database entries, first for major constituents to identify a specification of metal in the workpiece, and second for minor constituents to identify a source mill or foundry from which the metal originated. Then, in step 519, method 500 displays information, such as a SAE or ASTM specification name, and/or a foundry name, regarding the database entries that have the closest matches to the determined composition 334. In an alternative embodiment, method 500 displays basic information about the alloy, classifying the alloy in broad categories such as stainless steel, mild steel, and tool steel, together with an approximate national origin of the steel, and a warning message if excessive impurities like boron are detected.

Step 518 is optional. If included, in step 518, method 500 waits. In one example of step 518, the wait is the predefined delay before repeating step 502. In another example of step 518, the wait is until plasma torch 120 moves to cut a different area of workpiece 110. Method 500 then continues with step 502. Steps 502 through 518 thus repeat to determine composition of workpiece 110 using spectral analysis as workpiece 110 is cut by plasma arc 210.

By combining spectral analysis and plasma CNC cutting in a single machine (i.e., metal analyzing plasma CNC cutting machine 100), one or more of the following advantages are achieved:
- Spectral data is captured from the plasma arc as it cuts the workpiece, thereby avoiding the need for creating a separate arc or to use a laser to capture spectral data. This also avoids additional damage to the workpiece as would be needed for a separate test.
- The optical fiber path allows the spectral capture device to be positioned away from the plasma arc to reduce interference.
- Where the CNC cutting machine uses a bevel head apparatus, the actuator box is available to protect the spectral capture device - no additional protective enclosure is needed.
- In embodiments, the available processing power of the computer used for executing the CNC program and controlling the cutting machine is also used to analyze the spectral data and generate the determined composition.
- The combined solution makes valuable and often essential spectral analysis readily available, practical, and convenient for each cutting operation.
- The combined solution is more cost effective than using separate spectral analyzing devices.
- Automatic composition checks for each workpiece may be performed and the operator notified if the workpiece is of incorrect composition.
- The combined solution provides information to control quality and prevent wrong materials from being used or supplied in a field where two quite different types of steel can look identical in a steel workshop.

## Claims

1. A metal analyzing plasma CNC cutting machine (100), comprising:
a plasma cutting torch (120) controllable to cut a workpiece (110) with a plasma arc (210);
a lens (182) positioned and configured to capture light from the plasma arc;
a spectrometer (180) coupled to receive the captured light from the lens through an optical fiber (184) path and adapted to determine spectral data (506) of the captured light, the spectrometer adapted to obtain a sequence of spectra of the captured light over a range from 290-400 nanometers, each spectra of the sequence of spectra captured (504) within a time window of less than or equal to one-thirtieth second as cutting begins;
at least one computer (135) having a processor and memory (304) storing spectral analysis software (188) that includes machine readable instructions executable by the processor to:
determine a selected spectrum from the sequence of spectra by determining ratios (507) of a particular spectral line to background light for each spectrum and selecting a spectrum of the sequence of spectra providing a best ratio of that particular spectral line to background light, wherein the particular spectral line is a 347.6 nanometer spectral line emitted by ionized iron when the metal analyzing plasma CNC cutting machine is cutting a steel workpiece and an aluminium spectral line when the metal analyzing plasma CNC cutting machine is cutting an aluminium workpiece, and
analyze the selected spectrum (508) to generate (508) a determined composition indicative of primary alloy constituents and secondary impurities of the workpiece.

2. The metal analyzing plasma CNC cutting machine of claim 1, wherein:
the spectral analysis software further comprises machine readable instructions stored in the memory and executable by the processor to compare the determined composition to an expected composition of the workpiece and to generate an alert on a user interface of the at least one computer when the identified primary alloy constituents and secondary impurities do not match the expected composition.

3. The metal analyzing plasma CNC cutting machine of claim 1 wherein the spectral analysis software further comprises machine readable instructions configured to save the determined composition to a database on a server,
and, when the expected composition of the workpiece does not match the determined composition, to identify a previous entry of the database having a closest match to the identified primary alloy constituents and secondary impurities.

4. The metal analyzing plasma CNC cutting machine of any of the above
claims, further comprising:
a bed (140) for supporting the workpiece as it is cut;
a gantry (150) that traverses the bed (140) under control of the at least one computer (135); and
the plasma cutting torch (120) mounted to apparatus (128) configured to traverse the gantry (150) under control of the at least one computer (135).

5. The metal analyzing plasma CNC cutting machine of claim 4, the spectrometer (180) being positioned within an actuator box (150) of the apparatus (128) configured to traverse the gantry (150), the actuator box (150) adapted to protect the spectrometer (180) from interference and damage caused by the plasma arc (210), and where the lens (182) is configured to remain in fixed alignment to the plasma arc (210) despite movement of the plasma cutting torch (120) over the bed (140) under control of the at least one computer (135).

6. A method for analyzing composition of a workpiece being cut by a metal analyzing plasma CNC cutting machine according to any of claims 1-5, comprising:
capturing light (504) from a plasma arc of the plasma CNC cutting machine in a sequence of time windows as the plasma arc begins to cut the workpiece,
determining a sequence of spectra (504, 506, 507, 509) by obtaining a spectrum from the captured light in a range from 290-400 nanometers in each time window, each spectrum in the sequence of spectra captured in a time window of less than or equal to one-thirtieth of a second, examining each spectrum of the sequence of spectra for presence (509) and intensity of a particular spectral line, and
determining a ratio of the particular spectral line to background light, wherein the particular spectral line is a 347.6 nanometer spectral line emitted by ionized iron when the metal analyzing plasma CNC cutting machine is cutting a steel workpiece and an aluminium spectral line when the metal analyzing plasma CNC cutting machine is cutting an aluminium workpiece, and
selecting a spectrum of the sequence of spectra according to the ratio of that spectral line to background light;
generating spectral data from the selected spectrum; and
processing the spectral data to generate (508) a determined composition indicative of primary alloy constituents and secondary impurities of the workpiece.

7. The method of claim 6 where the time windows of the sequence of time windows are one-thirtieth second in duration.

8. The method of claim 6 where the time windows of the sequence of time windows are one-sixtieth second in duration.

9. The method of claim 6, 7, or 8, further comprising:
comparing (512) the determined composition to an expected composition (352) of the workpiece; and
when the determined composition does not match the expected composition (352) to within limits, generating (516) an alert (354) to notify an operator of a difference between the determined composition and the expected composition.

10. The method of claim 9, further comprising retrieving the expected composition of the workpiece from a database indexed by a specification.

11. The method of claim 6, 7, 8, 9, or 10, further comprising accessing a database to determine (517) a closest composition match in major alloying elements of the workpiece to entries of the database, and determining a specification of metal in the workpiece from the closest composition match.

12. The method of claim 11 further comprising accessing a database to determine a closest composition match in minor elements of the workpiece to entries of the database and determining a likely origin of metal in the workpiece from the closest composition match.

## Patentansprüche

1. Eine Metallanalysen-Plasma-CNC-Schneidmaschine (100), umfassend: einen Plasmaschneidbrenner (120), der steuerbar ist, um ein Werkstück (110) mit einem Plasma-Lichtbogen (210) zu schneiden;
eine Linse (182), die positioniert und konfiguriert ist, um Licht von dem Plasma-Lichtbogen zu erfassen;
ein Spektrometer (180), das gekoppelt ist, um das erfasste Licht von der Linse über einen optischen Faserverlauf (184) zu empfangen, und das angepasst ist, um Spektraldaten (506) des erfassten Lichts zu bestimmen, wobei das Spektrometer angepasst ist, um eine Abfolge von Spektren des erfassten Lichts in einem Bereich von 290-400 Nanometern zu erhalten, wobei jedes Spektrum der Abfolge von Spektren (504) innerhalb eines Zeitfensters von weniger als oder gleich einem Dreißigstel einer Sekunde erfasst wird, sobald das Schneiden beginnt;
mindestens einen Computer (135) mit einem Prozessor und einem Speicher (304), der Spektralanalysesoftware (188) speichert, die maschinenlesbare Anweisungen umfasst, die durch den Prozessor ausführbar sind, um:
ein ausgewähltes Spektrum aus der Abfolge von Spektren zu bestimmen, indem Verhältnisse (507) einer bestimmten Spektrallinie zu Hintergrundlicht für jedes Spektrum bestimmt werden und ein Spektrum der Abfolge von Spektren ausgewählt wird, das ein bestes Verhältnis dieser bestimmten Spektrallinie zu Hintergrundlicht bietet, wobei die bestimmte Spektrallinie eine 347,6-Nanometer-Spektrallinie ist, die von ionisiertem Eisen emittiert wird, wenn die Metallanalysen-Plasma-CNC-Schneidmaschine ein Stahlwerkstück schneidet, und eine Aluminium-Spektrallinie, wenn die Metallanalysen-Plasma-CNC-Schneidmaschine ein Aluminiumwerkstück schneidet, und
das ausgewählte Spektrum (508) zu analysieren, um (508) eine bestimmte Zusammensetzung zu erzeugen, die primäre Legierungsbestandteile und sekundäre Verunreinigungen des Werkstücks anzeigt.

2. Die Metallanalysen-Plasma-CNC-Schneidmaschine nach Anspruch 1, wobei:
die Spektralanalysesoftware ferner maschinenlesbare Anweisungen umfasst, die im Speicher gespeichert und durch den Prozessor ausführbar sind, um die bestimmte Zusammensetzung mit einer erwarteten Zusammensetzung des Werkstücks zu vergleichen und eine Warnung auf einer Benutzerschnittstelle des mindestens einen Computers zu erzeugen, wenn die identifizierten primären Legierungsbestandteile und sekundären Verunreinigungen nicht mit der erwarteten Zusammensetzung übereinstimmen.

3. Die Metallanalysen-Plasma-CNC-Schneidmaschine nach Anspruch 1, wobei die Spektralanalysesoftware ferner maschinenlesbare Anweisungen umfasst, die konfiguriert sind, um die bestimmte Zusammensetzung in einer Datenbank auf einem Server zu speichern, und,
wenn die erwartete Zusammensetzung des Werkstücks nicht mit den identifizierten primären Legierungsbestandteilen und sekundären Verunreinigungen übereinstimmt, um einen vorherigen Eintrag der Datenbank zu identifizieren, der die engste Übereinstimmung mit den identifizierten primären Legierungsbestandteilen und sekundären Verunreinigungen aufweist.

4. Die Metallanalysen-Plasma-CNC-Schneidmaschine nach einem der vorhergehenden Ansprüche, ferner umfassend:
ein Bett (140) zur Unterstützung des Werkstücks während es geschnitten wird;
ein Portal (150), das das Bett (140) unter der Steuerung des mindestens einen Computers (135) überquert bzw. traversiert; und
wobei der Plasmaschneidbrenner (120) an einer Vorrichtung (128) montiert ist, die konfiguriert ist, um das Portal (150) unter der Steuerung des mindestens einen Computers (135) zu überqueren.

5. Die Metallanalysen-Plasma-CNC-Schneidmaschine nach Anspruch 4, wobei das Spektrometer (180) innerhalb eines Stellantriebsgehäuses (150) der Vorrichtung (128) positioniert ist, die konfiguriert ist, um das Portal (150) zu überqueren, wobei das Stellantriebsgehäuse (150) angepasst ist, um das Spektrometer (180) vor Störungen und Schäden zu schützen, die durch den Plasma-Lichtbogen (210) verursacht werden, und wobei die Linse (182) konfiguriert ist, um in fester Ausrichtung zu dem Plasma-Lichtbogen (210) zu bleiben, trotz der Bewegung des Plasmaschneidbrenners (120) über das Bett (140) unter der Steuerung des mindestens einen Computers (135).

6. Ein Verfahren zur Analyse der Zusammensetzung eines Werkstücks, das von einer Metallanalysen-Plasma-CNC-Schneidmaschine nach einem der Ansprüche 1-5 geschnitten wird, umfassend:
Erfassen von Licht (504) von einem Plasma-Lichtbogen der Plasma-CNC-Schneidmaschine in einer Abfolge von Zeitfenstern, sobald der Plasma-Lichtbogen beginnt, das Werkstück zu schneiden,
Bestimmen einer Abfolge von Spektren (504, 506, 507, 509) durch Erhalten eines Spektrums aus dem erfassten Licht in einem Bereich von 290-400 Nanometern in jedem Zeitfenster, wobei jedes Spektrum in der Abfolge von Spektren in einem Zeitfenster von weniger als oder gleich einem Dreißigstel einer Sekunde erfasst wird, Untersuchen jedes Spektrums der Abfolge von Spektren auf Vorhandensein (509) und Intensität einer bestimmten Spektrallinie und Bestimmen eines Verhältnisses der bestimmten Spektrallinie zu Hintergrundlicht, wobei die bestimmte Spektrallinie eine 347,6-Nanometer-Spektrallinie ist, die von ionisiertem Eisen emittiert wird, wenn die Metallanalysen-Plasma-CNC-Schneidmaschine ein Stahlwerkstück schneidet, und eine Aluminium-Spektrallinie, wenn die Metallanalysen-Plasma-CNC-Schneidmaschine ein Aluminiumwerkstück schneidet, und
Auswählen eines Spektrums der Abfolge von Spektren gemäß dem Verhältnis dieser Spektrallinie zu Hintergrundlicht;
Erzeugen von Spektraldaten aus dem ausgewählten Spektrum; und
Verarbeiten der Spektraldaten, um (508) eine bestimmte Zusammensetzung zu erzeugen, die primäre Legierungsbestandteile und sekundäre Verunreinigungen des Werkstücks anzeigt.

7. Das Verfahren nach Anspruch 6, wobei die Zeitfenster der Abfolge von Zeitfenstern eine Dauer von einem Dreißigstel einer Sekunde aufweisen.

8. Das Verfahren nach Anspruch 6, wobei die Zeitfenster der Abfolge von Zeitfenstern eine Dauer von einem Sechzigstel einer Sekunde aufweisen.

9. Das Verfahren nach Anspruch 6, 7 oder 8, ferner umfassend:
Vergleichen (512) der bestimmten Zusammensetzung mit einer erwarteten Zusammensetzung (352) des Werkstücks; und
wenn die bestimmte Zusammensetzung nicht innerhalb von Grenzen mit der erwarteten Zusammensetzung (352) übereinstimmt, Erzeugen (516) einer Warnung (354), um einen Bediener über eine Differenz zwischen der bestimmten Zusammensetzung und der erwarteten Zusammensetzung zu informieren.

10. Das Verfahren nach Anspruch 9, ferner umfassend das Abrufen der erwarteten Zusammensetzung des Werkstücks aus einer Datenbank, die durch eine Spezifikation indiziert ist.

11. Das Verfahren nach Anspruch 6, 7, 8, 9 oder 10, ferner umfassend den Zugriff auf eine Datenbank, um (517) eine engste Zusammensetzungsübereinstimmung in Hauptelementen der Legierung des Werkstücks mit Einträgen der Datenbank zu bestimmen, und das Bestimmen einer Spezifikation des Metalls im Werkstück aus der engsten Zusammensetzungsübereinstimmung.

12. Das Verfahren nach Anspruch 11, ferner umfassend den Zugriff auf eine Datenbank, um eine engste Zusammensetzungsübereinstimmung in Nebenelementen des Werkstücks mit Einträgen der Datenbank zu bestimmen, und das Bestimmen eines wahrscheinlichen Ursprungs des Metalls im Werkstück aus der engsten Zusammensetzungsübereinstimmung.

## Revendications

1. Une machine de découpe plasma CNC d'analyse de métal (100), comprenant : un chalumeau de découpe plasma (120) commandable pour découper une pièce à usiner (110) avec un arc plasma (210) ;
une lentille (182) positionnée et configurée pour capturer la lumière de l'arc plasma ;
un spectromètre (180) couplé pour recevoir la lumière capturée de la lentille par un chemin de fibre optique (184) et adapté pour déterminer des données spectrales (506) de la lumière capturée, le spectromètre étant adapté pour obtenir une séquence de spectres de la lumière capturée sur une plage de 290 à 400 nanomètres, chaque spectre de la séquence de spectres étant capturé (504) dans une fenêtre de temps inférieure ou égale à un trentième de seconde dès que la découpe commence ;
au moins un ordinateur (135) ayant un processeur et une mémoire (304) stockant un logiciel d'analyse spectrale (188) qui comprend des instructions lisibles par machine exécutables par le processeur pour : déterminer un spectre sélectionné à partir de la séquence de spectres en déterminant des rapports (507) d'une ligne spectrale particulière par rapport à la lumière de fond pour chaque spectre et en sélectionnant un spectre de la séquence de spectres fournissant un meilleur rapport de cette ligne spectrale particulière par rapport à la lumière de fond, où la ligne spectrale particulière est une ligne spectrale de 347,6 nanomètres émise par du fer ionisé lorsque la machine de découpe plasma CNC d'analyse de métal découpe une pièce à usiner en acier et une ligne spectrale d'aluminium lorsque la machine de découpe plasma CNC d'analyse de métal découpe une pièce à usiner en aluminium et
analyser le spectre sélectionné (508) pour générer (508) une composition déterminée indicative des constituants d'alliage primaires et des impuretés secondaires de la pièce à usiner.

2. La machine de découpe plasma CNC d'analyse de métal selon la revendication 1, dans
laquelle : le logiciel d'analyse spectrale comprend en outre des instructions lisibles par machine stockées dans la mémoire et exécutables par le processeur pour comparer la composition déterminée à une composition attendue de la pièce à usiner et pour générer une alerte sur une interface utilisateur de l'au moins un ordinateur lorsque les constituants d'alliage primaires et les impuretés secondaires identifiés ne correspondent pas à la composition attendue.

3. La machine de découpe plasma CNC d'analyse de métal selon la revendication 1, dans laquelle le logiciel d'analyse spectrale comprend en outre des instructions lisibles par machine configurées pour enregistrer la composition déterminée dans une base de données sur un serveur,
et, lorsque la composition attendue de la pièce à usiner ne correspond pas aux constituants d'alliage primaires et aux impuretés secondaires identifiés, pour identifier une entrée précédente de la base de données ayant une correspondance la plus proche avec les constituants d'alliage primaires et les impuretés secondaires identifiés.

4. La machine de découpe plasma CNC d'analyse de métal selon l'une quelconque des revendications précédentes, comprenant en outre :
un lit (140) pour supporter la pièce à usiner pendant qu'elle est découpée ;
un portique (150) qui traverse le lit (140) sous le contrôle de l'au moins un ordinateur (135) ; et
le chalumeau de découpe plasma (120) monté sur un appareil (128) configuré pour traverser le portique (150) sous le contrôle de l'au moins un ordinateur (135).

5. La machine de découpe plasma CNC d'analyse de métal selon la revendication 4, le spectromètre (180) étant positionné à l'intérieur d'une boîte d'actionnement (150) de l'appareil (128) configuré pour traverser le portique (150), la boîte d'actionnement (150) étant adaptée pour protéger le spectromètre (180) des interférences et des dommages causés par l'arc plasma (210), et où la lentille (182) est configurée pour rester en alignement fixe par rapport à l'arc plasma (210) malgré le mouvement du chalumeau de découpe plasma (120) sur le lit (140) sous le contrôle de l'au moins un ordinateur (135).

6. Un procédé d'analyse de la composition d'une pièce à usiner découpée par une machine de découpe plasma CNC d'analyse de métal selon l'une quelconque des revendications 1 à 5, comprenant :
la capture de lumière (504) d'un arc plasma de la machine de découpe plasma CNC dans une séquence de fenêtres de temps dès que l'arc plasma commence à découper la pièce à usiner,
la détermination d'une séquence de spectres (504, 506, 507, 509) en obtenant un spectre de la lumière capturée dans une plage de 290 à 400 nanomètres dans chaque fenêtre de temps, chaque spectre de la séquence de spectres étant capturé dans une fenêtre de temps inférieure ou égale à un trentième de seconde, l'examen de chaque spectre de la séquence de spectres pour la présence (509) et l'intensité d'une ligne spectrale particulière, et la détermination d'un rapport de la ligne spectrale particulière par rapport à la lumière de fond, où la ligne spectrale particulière est une ligne spectrale de 347,6 nanomètres émise par du fer ionisé lorsque la machine de découpe plasma CNC d'analyse de métal découpe une pièce à usiner en acier et une ligne spectrale d'aluminium lorsque la machine de découpe plasma CNC d'analyse de métal découpe une pièce à usiner en aluminium, et
la sélection d'un spectre de la séquence de spectres selon le rapport de cette ligne spectrale par rapport à la lumière de fond ;
la génération de données spectrales à partir du spectre sélectionné ; et
le traitement des données spectrales pour générer (508) une composition déterminée indicative des constituants d'alliage primaires et des impuretés secondaires de la pièce à usiner.

7. Le procédé selon la revendication 6, dans lequel les fenêtres de temps de la séquence de fenêtres de temps ont une durée d'un trentième de seconde.

8. Le procédé selon la revendication 6, dans lequel les fenêtres de temps de la séquence de fenêtres de temps ont une durée d'un soixantième de seconde.

9. Le procédé selon la revendication 6, 7 ou 8, comprenant en outre :
la comparaison (512) de la composition déterminée à une composition attendue (352) de la pièce à usiner ; et
lorsque la composition déterminée ne correspond pas à la composition attendue (352) dans les limites, la génération (516) d'une alerte (354) pour notifier un opérateur d'une différence entre la composition déterminée et la composition attendue.

10. Le procédé selon la revendication 9, comprenant en outre la récupération de la composition attendue de la pièce à usiner à partir d'une base de données indexée par une spécification.

11. Le procédé selon la revendication 6, 7, 8, 9 ou 10, comprenant en outre l'accès à une base de données pour déterminer (517) une correspondance de composition la plus proche en éléments d'alliage majeurs de la pièce à usiner avec les entrées de la base de données, et la détermination d'une spécification du métal dans la pièce à usiner à partir de la correspondance de composition la plus proche.

12. Le procédé selon la revendication 11, comprenant en outre l'accès à une base de données pour déterminer une correspondance de composition la plus proche en éléments mineurs de la pièce à usiner avec les entrées de la base de données et la détermination d'une origine probable du métal dans la pièce à usiner à partir de la correspondance de composition la plus proche.
